# EUROPÄISCHE PATENTSCHRIFT

(11) **EP 3 423 220 B1**
(45) Veröffentlichungstag und Bekanntmachung des Hinweises auf die Patenterteilung: **26.02.2020**
(21) Anmeldenummer: 18724869.5
(22) Anmeldetag: 15.05.2018
(51) Int. Cl.: B22F 3/105, B22F 5/10, B29C 64/153

(54) **VERFAHREN UND VORRICHTUNG FÜR DIE ADDITIVE HERSTELLUNG VON WERKSTÜCKEN**
METHOD AND DEVICE FOR THE ADDITIVE MANUFACTURE OF WORKPIECES
PROCÉDÉ ET DISPOSITIF DESTINÉ À LA FABRICATION PAR IMPRESSION 3D DE PIÈCES

(30) Priorität: 16.05.2017 DE 102017110650
(43) Veröffentlichungstag der Anmeldung: 09.01.2019
(73) Patentinhaber: Ald Vacuum Technologies GmbH, 63457 Hanau (DE)
(72) Erfinder: NIEBLING, Arno, 63589 Linsengericht (DE); PROTZMANN, Michael, 63607 Wächtersbach (DE); HOLZ, Markus, 63486 Bruchköbel (DE); FRANZ, Henrik, 63579 Freigericht-Horbach (DE)
(74) Vertreter: Fuchs Patentanwälte Partnerschaft mbB
(86) Internationale Anmeldenummer: PCT/EP2018/062548
(87) Internationale Veröffentlichungsnummer: WO 2018/210825

(56) Entgegenhaltungen:
- EP-A1- 2 386 405
- EP-A1- 2 837 445
- EP-A2- 2 511 030
- DE-A1-102014 004 870
- DE-A1-102015 219 013

## Beschreibung

Die vorliegende Erfindung betrifft eine Vorrichtung und ein Verfahren zur additiven Herstellung von Werkstücken sowie eine Verwendung. Nach dem Verfahren herstellbare Werkstücke sind beispielsweise Turbinenschaufeln, es sind aber auch beliebige andere Geometrien herstellbar.

Vorrichtungen und Verfahren zur additiven Herstellung von Werkstücken sind aus dem Stand der Technik bekannt. Man spricht auch von "generativen Herstellungsverfahren" oder "3D-Druck". Bei diesen Verfahren wird ein Rohmaterial, meist in Pulverform, in Form einer Schicht auf eine Arbeitsfläche aufgetragen, um dort abschnittsweise geschmolzen oder gesintert zu werden. Auf die Schicht wird eine weitere Schicht aufgetragen und so verfahren wie mit der ersten Schicht. Dabei werden die zu schmelzenden bzw. zu sinternden Abschnitte so gewählt, dass schichtweise das dreidimensionale Werkstück aufgebaut wird.

Aus der EP 2 511 030 A2 ist beispielsweise ein Verfahren zum Herstellen von Bauteilen mit wenigstens einem in dem Bauteil angeordneten Bauelement bekannt. Bei diesem Verfahren werden das eine Bauelementdurchführung enthaltende Bauteil und das Bauelement gleichzeitig in dem schichtweisen Bauprozess hergestellt. Die so notwendige Bauelementdurchführung kann dadurch kleiner dimensioniert werden als der maximale Querschnitt des Bauelements in Durchführungsrichtung.

Die Verfahren und Vorrichtungen aus dem Stand der Technik weisen allerdings eine Reihe von Nachteilen auf. Beispielsweise sind viele Verfahren nicht wirtschaftlich. Dazu trägt bei, dass besonders bei Verwendung von Elektronenstrahlen zum Schmelzen bzw. Sintern ein Vakuum erforderlich ist. Nach Beendigung eines Herstellungsvorgangs muss das Werkstück aus der Prozesskammer entnommen werden, was den Verlust des Vakuums zur Folge hat. Die Wiederherstellung des Vakuums nimmt wiederum Zeit in Anspruch, während der der Herstellungsprozess eines weiteren Werkstücks noch nicht beginnen kann.

Auch die Säuberung der Prozesskammer und deren Herrichtung für ein Herstellungsverfahren nimmt Zeit in Anspruch. Während dieser Zeit kann das Herstellungsverfahren selbstverständlich nicht durchgeführt werden.

Die hergestellten Werkstücke sind unmittelbar nach der Herstellung sehr heiß. Viele Werkstoffe, insbesondere Metalle, sind in heißem Zustand reaktiv und dürfen nicht mit Luftsauerstoff in Berührung kommen. Daher müssen diese Werkstoffe vor der Entnahme aus dem evakuierten Bereich bis auf eine bestimmte Höchsttemperatur ab, bevor sie entnommen werden können. Während dieser Zeit kann der Herstellungsprozess eines weiteren Werkstücks noch nicht beginnen. Dies ist besonders relevant, da das für den Betrieb von Elektronenstrahlkanonen erforderliche Vakuum die Wärmeleitung durch Konvektion verhindert, sodass die Abkühlung erhebliche Zeit in Anspruch nimmt. Die Abkühlzeiten sind in vielen Verfahren des Standes der Technik auch deshalb sehr lang, weil das um ein hergestelltes Werkstück angeordnete Pulver die Wärme verhältnismäßig schlecht leitet. So dauert die Abkühlung nach der Herstellung meist mehrere Tage.

Für die additive Herstellung geeignete Strahlungsquellen erzeugen energiereiche Strahlung, zum Beispiel Laser- oder Elektronenstrahlung, die in den meisten Verfahren über die aufgetragenen Schichten gescannt wird. Dabei ist die Geschwindigkeit des Schmelzen oder Sinterns nicht nur von der Dauer abhängig, die erforderlich ist, um das Rohmaterial auf die erforderliche Temperatur zu bringen, sondern auch von der Scangeschwindigkeit, mit der der Strahl über das Rohmaterial gezogen werden kann. Hinzu kommt, dass Werkstücke, die eine gewisse Größe überschreiten, einen entsprechend großen Querschnitt aufweisen können, so dass die Fokussierung eines energiereichen Strahls Schwierigkeiten bereiten kann.

Darüber hinaus ist der Materialeinsatz für additive Herstellungsverfahren teilweise immens, da die für eine Schicht benötigte Auftragsmenge nicht von der Größe der Querschnittsfläche des herzustellenden Werkstückes, sondern von der Größe der Arbeitsfläche abhängt, auf die das Rohmaterial aufgebracht wird. Einmal eingesetztes Rohmaterial muss, auch wenn es nicht geschmolzen bzw. gesintert wurde, aufbereitet werden, bevor es wieder verwendet werden kann. Besonders bei teuren Werkstoffen wie Metallen oder Metalllegierungen ist es wünschenswert, den Materialeinsatz so gering wie möglich zu wählen.

Es ist eine Aufgabe der vorliegenden Erfindung, ein Verfahren, eine Vorrichtung und ein Herstellungssystem bereitzustellen, mit dem die Nachteile der Verfahren und Vorrichtungen aus dem Stand der Technik überwunden werden. Insbesondere ist es die Aufgabe dieser Erfindung, Verfahren, Vorrichtungen und Systeme bereitzustellen, die besonders wirtschaftlich im Hinblick auf benötigte Produktionszeit, Downtime, Materialeinsatz und Energiebedarf sind.

Die hierin vorgestellte Erfindung löst diese Aufgaben.

### Verfahren

Erfindungsgemäß ist ein Verfahren zur additiven Herstellung eines Werkstückes, mit den Schritten
a. Bereitstellen eines Arbeitstisches im Einflussbereich eines Satzes von Strahlungsquellen, wobei der Satz Strahlungsquellen wenigstens eine Strahlungsquelle umfasst und wobei der Arbeitstisch wenigstens eine absenkbare Hubfläche in einer Ausgangslage aufweist,
b. Vorlegen einer Schicht pulverförmigen Rohmaterials auf der Hubfläche,
c. Beaufschlagen von Bereichen der ersten Materialschicht, die der gewünschten Form des Werkstückes entsprechen, mit Strahlung aus der Strahlungsquelle, so dass das Rohmaterial in den Bereichen zumindest teilweise wenigstens auf seinen Schmelzpunkt erhitzt wird,
d. Absenken der Hubfläche aus der Ausgangslage, insbesondere um die Dicke der nachfolgend aufzutragenden Schicht,
e. Vorlegen einer weiteren Schicht Rohmaterials auf der zuvor beaufschlagten Schicht,
f. Beaufschlagen von Bereichen der weiteren Materialschicht, die der gewünschten Form des Werkstückes entsprechen, mit Strahlung aus der Strahlungsquelle, so dass das Pulver in den Bereichen zumindest teilweise wenigstens auf seinen Schmelzpunkt erhitzt wird,
g. Wiederholung der Schritte d. bis f. bis zur Fertigstellung des Werkstücks, wobei die Hubfläche sich bei Fertigstellung des Werkstückes in einer Endlage befindet,
h. Abkühlen des fertiggestellten Werkstückes auf der Hubfläche,
i. Entnahme des Werkstückes von der Hubfläche,
gekennzeichnet durch die weiteren Schritte
- Ermitteln des für die Herstellung des Werkstückes nicht benötigten Totvolumens innerhalb des Bauvolumens, der dem Raum zwischen Ausgangslage und Endlage der Hubfläche entspricht,
- Belegen des Bauvolumens mit einem oder mehreren Füllkörpern, so dass wenigstens ein Teil des Totvolumens belegt ist und ein von Füllkörpern nicht belegtes Bauvolumen verbleibt,
wobei die Hubfläche eine äußere Form aufweist, die es erlaubt, die Hubfläche relativ zu den Füllkörpern durch das Bauvolumen von der Ausgangslage in die Endlage abzusenken.

Der Begriff "Werkstück" bezieht sich erfindungsgemäß sowohl auf ein einzelnes Werkstück als auch auf eine Mehrzahl an Werkstücken. Insbesondere sind mit dem Verfahren und der Vorrichtung auch mehrere Werkstücke gleichzeitig bzw. gemeinsam mit anderen Werkstücken herstellbar.

Das Ermitteln des für die Herstellung des Werkstückes nicht benötigten Totvolumens innerhalb des Bauvolumens kann beispielsweise durch Vergleich eines Modells, insbesondere eines CAD-Modells, des Werkstückes mit dem Bauvolumen erfolgen.

Das Verfahren und die Vorrichtung dieser Erfindung eignet sich insbesondere für die Herstellung von großen Werkstücke oder einer Mehrzahl von Werkstücken. Dafür bietet die Vorrichtung ein Bauvolumen in der Prozesskammer von vorzugsweise wenigstens 1 m³, insbesondere sogar wenigstens 2 m³. Entsprechend wird für die Abkühlung nach der Herstellung viel Zeit benötigt, insbesondere wenigstens ein Tag oder mehrere Tage (insbesondere bei großen Werkstücken).

Das Rohmaterial ist vorzugsweise ein Metall oder eine Metalllegierung. Besonders bevorzugt sind Titan und Titanlegierungen, Nickelbasislegierungen, Superlegierungen und Stähle. Um Werkstücke mit hoher Oberflächenqualität zu erhalten, sollte das Rohmaterial Partikelgrößen aufweisen, die unterhalb von 500 µm, insbesondere unterhalb von 400 µm, unterhalb von 300 µm oder unterhalb von 200 µm liegen. Die Partikelgrößen des Rohmaterials sollten aber auch nicht zu klein sein, da dies die Fließfähigkeit des Pulvers verschlechtert und dessen Oberfläche vergrößert, sodass die Einstellung eines Vakuums umso mehr Zeit in Anspruch nimmt. Kleinere Partikel verlangsamen ferner den Aufbau des Werkstücks. In einer bevorzugten Ausführungsform beträgt daher die Partikelgröße des Rohmaterials wenigstens 1 µm, insbesondere wenigstens 10 µm, bevorzugt wenigstens 20 µm und besonders bevorzugt wenigstens 50 µm. Besonders bevorzugt beträgt die Partikelgröße 50 bis 150 µm. Unter "Partikelgröße" wird erfindungsgemäß bevorzugt die nach dem Prinzip der dynamischen Lichtstreuung gemessene durchschnittliche Partikelgröße verstanden.

Die Hubfläche ist aus einer Ausgangslage in eine Endlage absenkbar. Auf die Hubfläche wird während des erfindungsgemäßen Verfahrens Rohmaterial in Pulverform aufgetragen. Das Rohmaterial in Pulverform wird geschmolzen bzw. gesintert. Erfindungsgemäß bedeutet die Bedingung, dass sich der Arbeitstisch bzw. die Hubfläche in dem Einflussbereich der Strahlungsquelle befindet, dass der Arbeitstisch bzw. die Hubfläche zumindest so hoch angeordnet ist, dass eine auf der Hubfläche befindliche Pulverschicht vermittelt durch die Strahlung der Strahlungsquelle geschmolzen bzw. gesintert werden kann.

Mit einem "Satz Strahlungsquellen" ist erfindungsgemäß die Gesamtheit der für die additive Herstellung verwendeten Strahlungsquellen innerhalb einer Vorrichtung gemeint. Der Satz Strahlungsquellen kann dabei konstruktiv miteinander verbunden sein, zum Beispiel durch Befestigung aller Strahlungsquellen innerhalb eines Satzes an einer Befestigungsplatte oder auf andere Weise. Alternativ können die Strahlungsquellen jeweils einzeln an der Vorrichtung befestigt sein. Geeignete Strahlungsquellen sind Elektronenstrahlkanonen und Laser, wobei Elektronenstrahlkanonen bevorzugt sind. Elektronenstrahlkanonen haben gegenüber Laser den Vorteil höherer, und flexibel einstellbarer Leistungsdichten. Damit sind höhere Schmelztemperaturen realisierbar. Damit ist die Elektronenstrahlkanone gerade bei Rohmaterialien mit hoher Wärmeleitfähigkeit (Metalle, Metalllegierungen) als Strahlungsquelle vorteilhaft.

Darüber hinaus bietet eine Elektronenstrahlkanone die Möglichkeit, verhältnismäßig große Strahldurchmesser bzw. Spotgrößen zu verwenden, so dass auch ein Vorwärmen mit der Strahlungsquelle gut durchführbar ist. Insbesondere lässt sich das Rohmaterial vorsintern, so dass Pulverkörner in geringem Maße miteinander versintern. Das Vorsintern verhindert das durch elektrostatische Aufladung bedingte Zerstäuben ("smoke effect"), das andernfalls bei Bestrahlung mit Elektronenstrahlung zu befürchten ist. Ferner wird die Wärmeleitung durch das Vorsintern verbessern, da die Pulverkörner miteinander in engeren Kontakt gebracht werden.

In einer erfindungsgemäß bevorzugten Ausführungsform ist die Strahlungsquelle eine Elektronenstrahlkanone. Enthält der Satz Strahlungsquellen mehr als eine Strahlungsquelle, so sind vorzugsweise alle Strahlungsquellen des Satzes Elektronenstrahlkanonen. In einer bevorzugten Ausführungsform weist der Satz Strahlungsquellen wenigstens zwei, wenigstens drei oder wenigstens vier Strahlungsquellen auf. Die Verwendung mehrerer Strahlungsquellen hat sich als vorteilhaft erwiesen, da auf diese Weise auch bei Werkstücken mit großer Querschnittsfläche oder einer Mehrzahl von Werkstücken eine gleichmäßig gute Fokussierung auf die zu bestrahlenden Abschnitte möglich ist und die Arbeitsgeschwindigkeit deutlich erhöht werden kann.

Das beschriebene Verfahren hat den Vorteil, dass durch das Belegen des Bauvolumens mit wenigstens einem Füllkörper das zur Verfügung stehende Bauvolumen reduziert und somit weniger Rohmaterial für die Herstellung eines Werkstückes verwendet werden kann. Zwar wird regelmäßig nicht das gesamte Totvolumen mit Füllkörpern belegbar sein, da nach Bestrahlung einer Materialschicht immer unbestrahlte Bereiche verbleiben. Diese unbestrahlten Bereiche, die aus pulverförmigem Material bestehen, sind im Vergleich zu herkömmlichen Verfahren aber kleiner. Dadurch muss weniger Pulver verworfen oder recycelt werden. Zudem ist die Wärmeleitfähigkeit des Pulvers schlecht und insbesondere geringer als die Wärmeleitfähigkeit des Füllkörpers, so dass der Füllkörper die Abkühlung der Werkstücke stark beschleunigen kann. Die Füllkörper sind erfindungsgemäß aus der Vorrichtung entnehmbar, also allenfalls lösbar mit der Vorrichtung verbunden. Die Füllkörper stehen während des Verfahrens zumindest teilweise mit pulverförmigem Rohmaterial in Kontakt.

Die Vorteile des erfindungsgemäßen Verfahrens kommen besonders bei Auftragsvorrichtungen in Form von Pulververteilelementen (z.B. Rakel) zum Tragen, die eine Pulverfraktion über den Arbeitstisch schieben und dadurch ein Vorlegen des Rohmaterials auf der Hubfläche veranlassen. Solche Pulververteilungselemente haben den Vorteil, dass sie die aufgetragene Materialschicht auch glätten können. Um mit solchen Auftragsvorrichtungen arbeiten zu können, enden die Füllkörper vorzugsweise auf Höhe des Arbeitstisches, insbesondere unter Bildung einer ebenen Fläche mit dem Arbeitstisch.

In einer bevorzugten Ausführungsform ist wenigstens einer und insbesondere alle Füllkörper aus einem Material mit einer hohen Wärmeleitfähigkeit gefertigt. Auf diese Weise kann die Wärmeableitung weiter verbessert werden. Eine "hohe Wärmeleitfähigkeit" ist insbesondere eine Wärmeleitfähigkeit bei 0 °C von wenigstens 13 W/(m*K), mehr bevorzugt wenigstens 40 W/(m*K), ferner bevorzugt wenigstens 100 W/(m*K) und ganz besonders bevorzugt wenigstens 200 W/(m*K). In erfindungsgemäß bevorzugten Ausführungsformen ist die Wärmeleitfähigkeit sogar noch höher, insbesondere wenigstens 250 W/(m*K) und besonders bevorzugt wenigstens 300 W/(m*K). Geeignete Materialien sind Metalle und Metalllegierungen, insbesondere Stahl, Kupfer oder Kupferlegierungen. Der Einsatz von Füllkörpern und insbesondere solchen mit hoher Wärmeleitfähigkeit ermöglichen eine signifikante Beschleunigung der Abkühlgeschwindigkeit und damit des gesamten Verfahrens. Gerade bei Durchführung des Verfahrens im Vakuum - wie es erfindungsgemäß bevorzugt ist - kann der Einsatz von Füllkörpern die ansonsten wegen fehlender Konvektion stark eingeschränkte Abkühlung der Werkstücke verbessern.

In einer Ausführungsform kann ein Füllkörper mit einem Fluid temperiert werden. Das Temperieren kann ein Erwärmen oder Kühlen sein. Durch ein Kühlen des Füllkörpers mit einem Fluid kann die Abkühlung weiter beschleunigt werden. Alternativ kann der Füllkörper erwärmt werden. Durch ein Erwärmen des Füllkörpers kann das Rohmaterial vor dem Schmelzen bzw. Sintern vorgewärmt werden. Das Fluid zum Temperieren ist bei Standardbedingungen (DIN 1343:1990) flüssig oder gasförmig. Flüssige Fluide sind bevorzugt. Das Fluid ist vorzugsweise ausgewählt aus Wasser, Thermalöl, Inertgas, Luft und flüssigem Metall (z.B. NaK, Wood'sche Legierung). Wasser ist aufgrund seiner geringen Kosten bevorzugt. Der Einsatz von gasförmigern Fluid ist aufgrund der geringeren Wärmekapazität weniger vorteilhaft, bei geringerer beabsichtigter Kühlleistung aber möglich.

In einer bevorzugten Ausführungsform ist die Hubfläche aus einem Material mit einer hohen Wärmeleitfähigkeit gefertigt. Auf diese Weise kann die Wärmeableitung weiter verbessert werden, insbesondere wenn Füllkörper auf der Hubfläche angeordnet sind. Eine "hohe Wärmeleitfähigkeit" ist insbesondere eine Wärmeleitfähigkeit bei 0 °C von wenigstens 13 W/(m*K), mehr bevorzugt wenigstens 40 W/(m*K), ferner bevorzugt wenigstens 100 W/(m*K) und ganz besonders bevorzugt wenigstens 200 W/(m*K). In erfindungsgemäß bevorzugten Ausführungsformen ist die Wärmeleitfähigkeit sogar noch höher, insbesondere wenigstens 250 W/(m*K) und besonders bevorzugt wenigstens 300 W/(m*K). Geeignete Materialien sind Metalle und Metalllegierungen, insbesondere Stahl, Kupfer oder Kupferlegierungen. Der Einsatz von Hubflächen mit hoher Wärmeleitfähigkeit ermöglicht eine signifikante Beschleunigung der Abkühlgeschwindigkeit und damit des gesamten Verfahrens. Gerade bei Durchführung des Verfahrens im Vakuum - wie es erfindungsgemäß bevorzugt ist - kann der Einsatz solcher Hubflächen die ansonsten wegen fehlender Konvektion stark eingeschränkte Abkühlung der Werkstücke verbessern.

In einer Ausführungsform kann die Hubfläche mit einem Fluid temperiert werden. Das Temperieren kann ein Erwärmen oder Kühlen sein. Durch ein Kühlen der Hubfläche mit einem Fluid kann die Abkühlung weiter beschleunigt werden. Alternativ kann die Hubfläche erwärmt werden. Durch ein Erwärmen der Hubfläche kann das Rohmaterial vor dem Schmelzen bzw. Sintern vorgewärmt werden. Das Fluid zum Temperieren ist bei Standardbedingungen (DIN 1343:1990) flüssig oder gasförmig. Flüssige Fluide sind bevorzugt. Das Fluid ist vorzugsweise ausgewählt aus Wasser, Thermalöl, Inertgas, Luft und flüssigem Metall (z.B. NaK, Wood'sche Legierung). Wasser ist aufgrund seiner geringen Kosten bevorzugt. Der Einsatz von gasförmigem Fluid ist aufgrund der geringeren Wärmekapazität weniger vorteilhaft, bei geringerer beabsichtigter Kühlleistung aber möglich.

Wie zuvor erwähnt wird vorzugsweise nicht das gesamte Totvolumen mit Füllkörpern belegt, da nach dem Beaufschlagen von Bereichen der Materialschicht immer ein Rest Rohmaterial um die bestrahlten Bereiche herum verbleibt. Ein weiterer Grund, weshalb das Totvolumen nicht vollständig belegbar ist, liegt darin, dass viele Werkstücke keine gleich bleibenden Querschnitte aufweisen, ein Füllkörper aber nicht während der Herstellung in horizontaler Richtung bewegt werden kann. Um wenigstens solche Werkstücke mit den Vorteilen des Verfahrens dieser Erfindung herstellen zu können, die Kavitäten aufweisen, wird in einer bevorzugten Ausführungsform des Verfahrens dieser Erfindung wenigstens ein Füllkörper zusammen mit oder unabhängig von der Hubfläche abgesenkt. Darunter wird ein Absenken des Füllkörpers im Verhältnis zu dem Arbeitstisch während der Durchführung der additiven Herstellung verstanden. Auf diese Weise wird die zuvor von dem Füllkörper belegte Querschnittsfläche des Bauvolumens für den nächsten Materialauftrag frei und kann mit Strahlung beaufschlagt werden. Die Erfindung umfasst Ausführungsformen, in denen wenigstens einer und insbesondere alle Füllkörper während der Durchführung der additiven Herstellung nicht im Verhältnis zu dem Arbeitstisch abgesenkt werden.

Das erfindungsgemäße Verfahren wird vorzugsweise unter Vakuum durchgeführt. Dies entspricht bevorzugt einem Druck von höchstens 10⁻¹ mbar, vorzugsweise höchstens 10⁻² mbar oder höchstens 10⁻³ mbar. Vorzugsweise herrscht zumindest während der Schritte c. bis g. und insbesondere während der Schritte b. bis g. der genannte Druck.

In einer Ausführungsform erfolgt vor dem Beaufschlagen der Materialschicht in Schritt c. und/oder vor dem Beaufschlagen der Materialschicht in Schritt f. ein Vorwärmen und/oder Vorsintern der Materialschicht. Das Vorwärmen bzw. Vorsintern kann unter Verwendung einer Wärmequelle erfolgen, die insbesondere mit der Strahlungsquelle identisch sein kann. Das Vorwärmen bzw. Vorsintern hat den Vorteil, dass nicht der gesamte Wärmeeintrag in einem Zuge beim Aufbau des Werkstückes erfolgt. Gerade bei Verwendung von Elektronenstrahlkanonen kann es sonst zu einem Zerstäuben des Rohmaterials aufgrund elektrostatischer Aufladung kommen.

In einer Ausführungsform wird das hergestellte Werkstück im Anschluss an Schritt g. gekühlt. Dies kann in einer separaten Kammer geschehen, in die das Werkstück ggf. noch auf der Hubfläche befindlich überführt wurde. Die Kammer wird hierin als Formenkammer bezeichnet.

In einer Ausführungsform ist die Formenkammer eingerichtet, ein darin befindliches Werkstück mit einem Kühlgas zu kühlen. Vorzugsweise weist die Formenkammer wenigstens einen Einlass und/oder wenigstens einen Auslass für das Kühlgas auf. In einer Ausführungsform weist die Formenkammer wenigstens ein Mittel zum Umwälzen einer in der Formenkammer befindlichen Menge Kühlgas auf. Das Mittel kann insbesondere ein Lüfter oder eine Umwälzpumpe sein. Die erfindungsgemäße Vorrichtung ermöglicht es, Formenkammer und Prozesskammer jeweils zu verschließen, sodass unterschiedliche Atmosphären (z.B. Vakuum oder Inertgas) in den beiden Kammern eingestellt werden können. Insbesondere kann in der Formenkammer, in der ein Werkstück abkühlt, die Abkühlung mit einem Kühlgas unterstützt werden, ohne dass ein Vakuum in der Prozesskammer beeinträchtigt wird. Dabei strömt in einer Ausführungsform Kühlgas durch einen Einlass. Insbesondere strömt das Kühlgas durch einen Auslass wieder aus der Formenkammer heraus und/oder das Kühlgas wird in der Formenkammer umgewälzt, um eine optimale Kühlwirkung zu erzielen.

In einer Ausführungsform ist das Kühlgas ein Inertgas insbesondere Helium, Argon, Xenon und/oder Stickstoff.

### Verwendung

Bevorzugt ist auch die Verwendung eines oder mehrerer Füllkörper, insbesondere eines zuvor beschriebenen Füllkörpers, zur Belegung wenigstens eines Teils eines Totvolumens in einem Bauvolumen einer Vorrichtung zur additiven Herstellung von Werkstücken.

Erfindungsgemäß ist auch die Verwendung eines erfindungsgemäßen Verfahrens zur Verringerung des Rohmaterialeinsatzes und/oder zur Verbesserung der Abkühlung von Werkstücken.

### Vorrichtung

Erfindungsgemäß ist auch eine Vorrichtung zur additiven Herstellung von Werkstücken mit
- einem Satz von Strahlungsquellen, der wenigstens eine Strahlungsquelle umfasst,
- wenigstens einer absenkbaren Hubfläche,
- wenigstens einem Materialreservoir für ein Rohmaterial in Pulverform,
- wenigstens einer Prozesskammer,
wobei die Hubfläche zwischen einer Ausgangslage im Einflussbereich der Strahlungsquelle und einer Endlage unterhalb der Ausgangslage bewegbar ist, und sich zwischen Ausgangslage und Endlage ein Bauvolumen für die additive Herstellung von Werkstücken erstreckt,
dadurch gekennzeichnet, dass wenigstens ein Füllkörper unter Belegung eines Teilvolumens des Bauvolumens in diesem angeordnet ist und die Hubfläche eine äußere Form aufweist, die es erlaubt, die Hubfläche relativ zu den Füllkörpern durch den Bauvolumen von der Ausgangslage in die Endlage abzusenken.

In einer bevorzugten Ausführungsform ist der Satz Strahlungsquellen in einem oberen Abschnitt der Prozesskammer angeordnet, insbesondere oberhalb des Arbeitstisches, an dem die additive Herstellung des Werkstückes stattfindet.

Wenn nichts anderes angegeben ist, bedeutet "Kammer", wie in "Prozesskammer", lediglich, dass es sich bei einem so bezeichneten Bauelement um einen nach allen Seiten verschließbaren Raum handelt, sodass eine kontrollierte Atmosphäre wie insbesondere ein Vakuum eingestellt werden kann. Eine Kammer kann erfindungsgemäß jedwede äußere Form annehmen. Die Prozesskammer ist erfindungsgemäß diejenige Kammer, in der die additive Herstellung des Werkstückes stattfindet. Insbesondere befindet sich der Einflussbereich der Strahlungsquelle in der Prozesskammer.

Innenräume der Prozesskammer sind insbesondere vakuumdicht verschließbar. Dies bedeutet, dass die Volumenleckrate der Kammer weniger als 1*10⁻² mbar*l/s, insbesondere weniger als 5*10⁻³ mbar*l/s, beträgt. Die Volumenleckrate wird vorzugsweise bei 20°C und 1013 hPa Umgebungsdruck gemessen. Auf diese Weise lässt sich in der Kammer die gewünschte Atmosphäre einstellen und halten. Vakuumdichte Kammern werden für die additive Herstellung unter Verwendung von Elektronenstrahlkanonen benötigt, da hierbei - anders als bei Herstellungsverfahren z.B. mit Lasern - ein Vakuum und nicht lediglich eine Schutzgasatmosphäre gehalten werden muss.

Das Materialreservoir dient dazu, das Rohmaterial in Pulverform für das Herstellungsverfahren vorzuhalten. Dabei kann das Materialreservoir Rohmaterial für die Durchführung mehrerer Herstellungsgänge enthalten. Das Materialreservoir kann in Form von einer oder mehreren zumindest abschnittsweise trichterförmigen Kammern in einem oberen Teil der Prozesskammer angeordnet sein. In einer vorteilhaften Ausführungsform weist die Vorrichtung wenigstens zwei Materialreservoire auf; diese können insbesondere auf gegenüberliegenden Seiten des Einflussbereichs der Strahlungsquelle angeordnet sein. Vorzugsweise ist das Materialreservoir oberhalb derjenigen Ebene angeordnet, in der der Schmelz- bzw. Sintervorgang stattfindet. Auf diese Weise kann das Rohmaterial in Pulverform der Schwerkraft folgend in den Arbeitsbereich hinabfließen bzw. dort verteilt werden. In einer Ausführungsform weist das Materialreservoir eine optional verschließbare Öffnung zur Prozesskammer auf.

Für die Einstellung eines Vakuums in der Prozesskammer weist die Vorrichtung vorzugsweise wenigstens eine Vakuumpumpe, insbesondere eine Diffusionspumpe, auf. In einer Ausführungsform ist eine Vakuumpumpe der Prozesskammer zugeordnet, d.h. sie ist so mit der Prozesskammer verbunden, dass sie in der Prozesskammer ein Vakuum herstellen kann. Die Vorrichtung kann mehrere Vakuumpumpen aufweisen.

### Kurzbeschreibung der Figuren

**Figur 1** zeigt einen Querschnitt einer erfindungsgemäßen Vorrichtung zur Durchführung des erfindungsgemäßen Verfahrens am Beginn des Verfahrens.
**Figur 2** zeigt einen Querschnitt einer erfindungsgemäßen Vorrichtung zur Durchführung des erfindungsgemäßen Verfahrens nach teilweiser Herstellung des Werkstücks.
**Figur 3** zeigt einen Querschnitt einer erfindungsgemäßen Vorrichtung zur Durchführung des erfindungsgemäßen Verfahrens bei weit fortgeschrittener Herstellung des Werkstücks.
**Figur 4** zeigt einen Querschnitt einer erfindungsgemäßen Vorrichtung zur Durchführung des erfindungsgemäßen Verfahrens bei vollendeter Herstellung des Werkstücks mit Hubfläche in Endlage.

### Beschreibung der Figuren

Die nachfolgend mit Bezug zu den Figuren beschriebenen erfindungsgemäßen Ausführungsformen stellen lediglich bevorzugte Ausführungsformen der Erfindung dar und schränken den Schutzgegenstand nicht ein. Im Rahmen der Figurenbeschreibung beschriebene Merkmale der Vorrichtungen, Verfahren und Verwendungen dieser Erfindung stellen auch im Hinblick auf die zuvor allgemein beschriebenen Vorrichtungen, Verfahren und Verwendungen bevorzugte Merkmale dar.

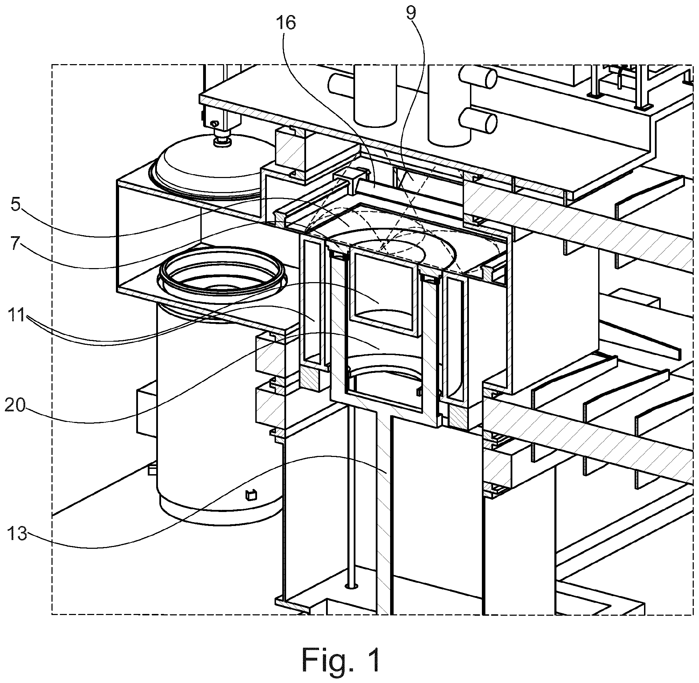

**Figur 1** zeigt eine erfindungsgemäße Vorrichtung mit einer Hubfläche 7, einem Arbeitstisch 5, eine Auftragsvorrichtung 16 für Rohmaterial in Pulverform und einer Öffnung 9 des Materialreservoirs. Die Hubfläche 7 wird mithilfe einer Hebevorrichtung 13 angehoben bzw. abgesenkt. Die Hubfläche 7 befindet sich in ihrer Ausgangslage. Es ist noch kein Rohmaterial auf die Hubfläche 7 aufgetragen. Das Totvolumen 20 ist teilweise mit Füllkörpern 11 belegt. Die Hubfläche 7 weist eine äußere Form auf, die es erlaubt, die Hubfläche 7 relativ zu den Füllkörpern durch das Bauvolumen von der Ausgangslage in die Endlage abzusenken. Der Arbeitstisch 5 befindet sich im Einflussbereich eines Satzes von Strahlungsquellen. Bevorzugt erfolgt als nächster Schritt das Vorlegen einer Schicht pulverförmigen Rohmaterials auf der Hubfläche 7.

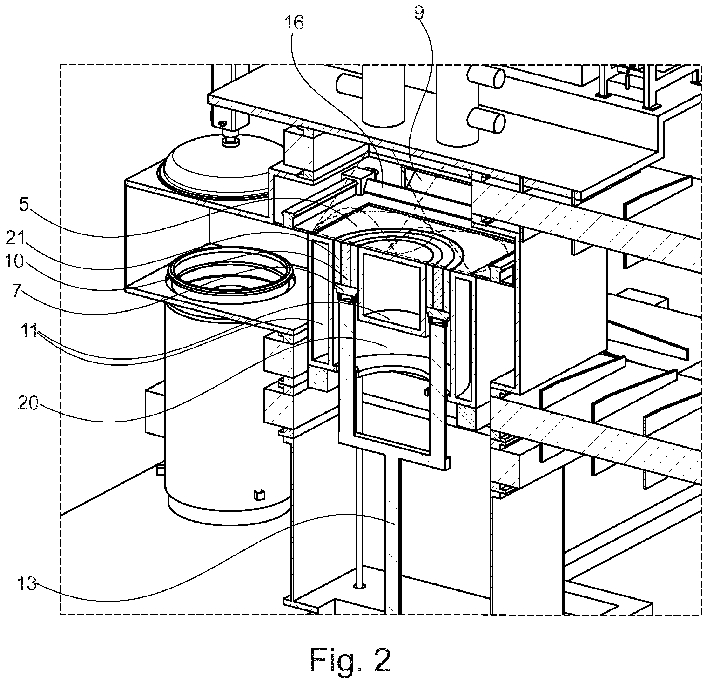

**Figur 2** zeigt ebenfalls eine erfindungsgemäße Vorrichtung in einem Betriebszustand, der im Rahmen des erfindungsgemäßen Verfahrens auf den in Figur 1 gezeigten Betriebszustand folgt. Ein Werkstück 10 ist bereits teilweise hergestellt, die Hubfläche 7 ist bereits teilweise relativ zu den Füllkörpern 11 durch das Bauvolumen aus der Ausgangslage in eine Zwischenlage abgesenkt. Zwischen dem bereits teilweise hergestellten Werkstück 10 und den Füllkörpern 11 befindet sich Rohmaterial in Pulverform 21.

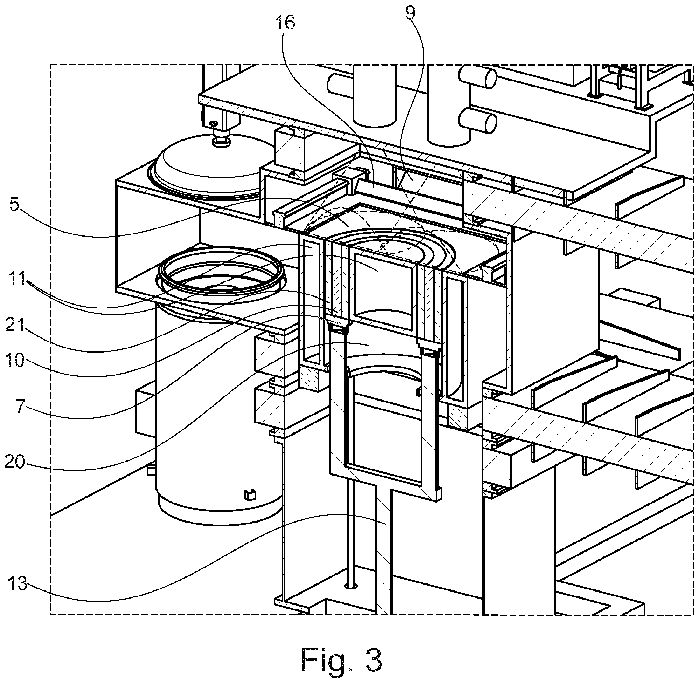

**Figur 3** zeigt ebenfalls eine erfindungsgemäße Vorrichtung in einem Betriebszustand, der im Rahmen des erfindungsgemäßen Verfahrens auf den in Figur 2 gezeigten Betriebszustand folgt. Werkstück 10 ist bereits nahezu fertiggestellt.

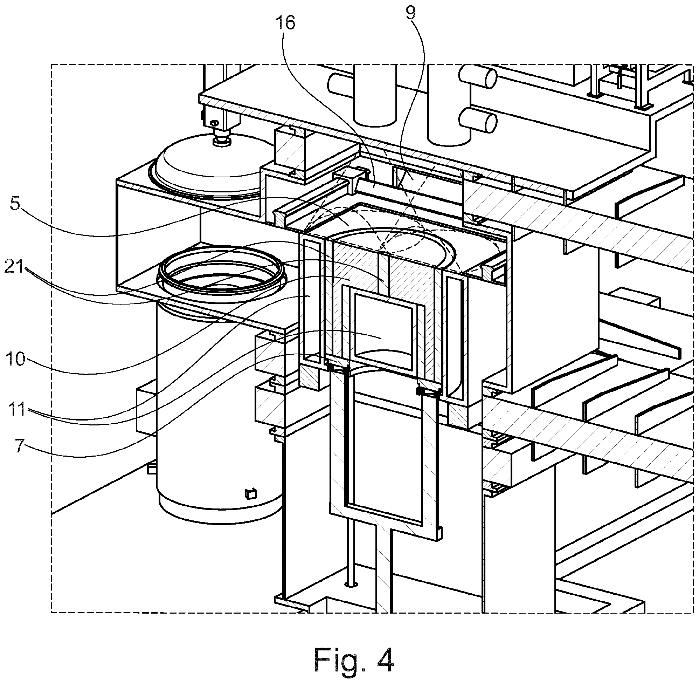

**Figur 4** zeigt ebenfalls eine erfindungsgemäße Vorrichtung in einem Betriebszustand, der im Rahmen des erfindungsgemäßen Verfahrens auf den in Figur 3 gezeigten Betriebszustand folgt. Werkstück 10 ist fertiggestellt, Hubfläche 7 befindet sich in der Endlage. Der in der Mitte des Bauvolumens angeordnete Füllkörper 11 ist zusammen mit Hubfläche 7 abgesenkt worden.

### Bezugszeichenliste

- 5: Arbeitstisch
- 7: Hubfläche
- 9: Öffnung des Materialreservoirs
- 10: Werkstück
- 11: Füllkörper
- 13: Hebevorrichtung
- 16: Auftragsvorrichtung
- 20: Totvolumen
- 21: Pulver

## Patentansprüche

1. Verfahren zur additiven Herstellung eines Werkstückes (10), mit den Schritten
a. Bereitstellen eines Arbeitstisches (5) im Einflussbereich eines Satzes von Strahlungsquellen, wobei der Satz Strahlungsquellen wenigstens eine Strahlungsquelle umfasst und wobei der Arbeitstisch (5) wenigstens eine absenkbare Hubfläche (7) in einer Ausgangslage aufweist,
b. Vorlegen einer Schicht pulverförmigen Rohmaterials (21) auf der Hubfläche (7),
c. Beaufschlagen von Bereichen der ersten Materialschicht, die der gewünschten Form des Werkstückes (10) entsprechen, mit Strahlung aus der Strahlungsquelle, so dass das Rohmaterial (21) in den Bereichen zumindest teilweise wenigstens auf seinen Schmelzpunkt erhitzt wird,
d. Absenken der Hubfläche (7) aus der Ausgangslage,
e. Vorlegen einer weiteren Schicht Rohmaterials (21) auf der zuvor beaufschlagten Schicht,
f. Beaufschlagen von Bereichen der weiteren Materialschicht, die der gewünschten Form des Werkstückes (10) entsprechen, mit Strahlung aus der Strahlungsquelle, so dass das Pulver (21) in den Bereichen zumindest teilweise wenigstens auf seinen Schmelzpunkt erhitzt wird,
g. Wiederholung der Schritte d. bis f. bis zur Fertigstellung des Werkstücks (10), wobei die Hubfläche (7) sich bei Fertigstellung des Werkstückes (10) in einer Endlage befindet,
h. Abkühlen des fertiggestellten Werkstückes auf der Hubfläche (7),
i. Entnahme des Werkstückes (10) von der Hubfläche (7),
**gekennzeichnet durch** die weiteren Schritte
- Ermitteln des für die Herstellung des Werkstückes (10) nicht benötigten Totvolumens (20) innerhalb des Bauvolumens, der dem Raum zwischen Ausgangslage und Endlage der Hubfläche (7) entspricht,
- Belegen des Bauvolumens mit einem oder mehreren Füllkörpern (11), so dass wenigstens ein Teil des Totvolumens (20) belegt ist und ein von Füllkörpern (11) nicht belegtes Bauvolumen verbleibt,
wobei die Hubfläche (7) eine äußere Form aufweist, die es erlaubt, die Hubfläche (7) relativ zu den Füllkörpern (11) durch das Bauvolumen von der Ausgangslage in die Endlage abzusenken.

2. Verfahren nach Anspruch 1, wobei wenigstens einer der Füllkörper (11) aus einem Material mit einer hohen Wärmeleitfähigkeit besteht und/oder mit einem Fluid temperiert wird.

3. Verfahren nach Anspruch 1 oder 2, wobei die Hubfläche (11) aus einem Material mit einer hohen Wärmeleitfähigkeit besteht und/oder mit einem Fluid temperiert wird.

4. Verfahren nach Anspruch 2 oder 3, wobei das Temperieren ein Erwärmen oder Kühlen ist.

5. Verfahren nach einem der Ansprüche 2 bis 4, wobei das Fluid flüssig oder gasförmig ist.

6. Verfahren nach wenigstens einem der Ansprüche 2 bis 5, wobei das Fluid ausgewählt ist aus Wasser, Thermalöl, Inertgas, Luft und flüssigem Metall.

7. Verfahren nach wenigstens einem der vorhergehenden Ansprüche, wobei wenigstens ein Füllkörper (11) zusammen mit oder unabhängig von der Hubfläche (7) abgesenkt wird.

8. Verfahren nach wenigstens einem der vorhergehenden Ansprüche, wobei der Satz von Strahlungsquellen wenigstens zwei, wenigstens drei oder wenigstens vier Strahlungsquellen aufweist.

9. Verfahren nach wenigstens einem der vorhergehenden Ansprüche, wobei zumindest die Schritte c. bis g. bei einem Druck von höchstens 10⁻³ mbar durchgeführt werden.

10. Verfahren nach wenigstens einem der vorhergehenden Ansprüche, wobei die Strahlungsquelle eine Elektronenstrahlkanone ist.

11. Verfahren nach wenigstens einem der vorhergehenden Ansprüche, wobei das Werkstück in einer von der Prozesskammer separaten Kammer abkühlt.

12. Vorrichtung zur additiven Herstellung von Werkstücken (10) mit
- einem Satz von Strahlungsquellen, der wenigstens eine Strahlungsquelle umfasst,
- wenigstens einer absenkbaren Hubfläche (7),
- wenigstens einem Materialreservoir für ein Rohmaterial in Pulverform (21),
- wenigstens einer Prozesskammer,
wobei die Hubfläche (7) zwischen einer Ausgangslage im Einflussbereich der Strahlungsquelle und einer Endlage unterhalb der Ausgangslage bewegbar ist, sich zwischen Ausgangslage und Endlage ein Bauvolumen für die additive Herstellung von Werkstücken (10) erstreckt und wenigstens ein Füllkörper (11) unter Belegung eines Teilvolumens des Bauvolumens in diesem angeordnet ist,
**dadurch gekennzeichnet, dass** die Hubfläche (7) eine äußere Form aufweist, die es erlaubt, die Hubfläche (7) relativ zu den Füllkörpern (11) durch das Bauvolumen von der Ausgangslage in die Endlage abzusenken.

13. Vorrichtung nach Anspruch 12, wobei wenigstens einer der Füllkörper (11) aus einem Material mit einer hohen Wärmeleitfähigkeit besteht und/oder mit einem Fluid temperierbar ist.

14. Vorrichtung nach Anspruch 12 oder 13, wobei die Hubfläche (7) aus einem Material mit einer hohen Wärmeleitfähigkeit besteht und/oder mit einem Fluid temperierbar ist.

15. Vorrichtung nach wenigstens einem der Ansprüche 12 bis 14, wobei wenigstens ein Füllkörper (11) zusammen mit oder unabhängig von der Hubfläche (7) absenkbar ist.

16. Vorrichtung nach wenigstens einem der Ansprüche 12 bis 15, wobei der Satz von Strahlungsquellen wenigstens zwei, wenigstens drei oder wenigstens vier Strahlungsquellen aufweist.

17. Vorrichtung nach wenigstens einem der Ansprüche 12 bis 16, umfassend wenigstens eine Vakuumpumpe.

18. Vorrichtung nach wenigstens einem der Ansprüche 12 bis 17, wobei die Strahlungsquelle eine Elektronenstrahlkanone ist.

## Claims

1. A method for the additive manufacture of a workpiece (10) with the steps
a. providing of a work table (5) within the zone of influence of a set of radiation sources, wherein the set of radiation sources comprises at least one radiation source and wherein the work table (5) comprises at least one lowerable lifting area (7) in a starting position,
b. providing of a layer of powdery raw material (21) on the lifting area (7),
c. exposing of regions of the first material layer which correspond to the desired shape of the workpiece (10) to radiation from the radiation source so that the raw material (21) in said regions is at least partially heated to at least its melting point,
d. lowering of the lifting area (7) with respect to the starting position,
e. providing of a further layer of raw material (21) on the layer which has been exposed before,
f. exposing of regions of the further material layer which correspond to the desired shape of the workpiece (10) to radiation from the radiation source so that the powder (21) in said regions is at least partially heated to at least its melting point,
g. repeating of the steps d. to f. until completion of the workpiece (10), wherein the lifting area (7) at the time of completion of the workpiece (10) is in an end position,
h. cooling of the completed workpiece on the lifting area (7),
i. removing of the workpiece (10) from the lifting area (7),
**characterized by** the additional steps
- calculating of the dead volume (20) within the construction volume which is not required for the manufacture of the workpiece (10), corresponding to the space between the starting position and the end position of the lifting area (7),
- occupying of the construction volume with one or several filling elements (11) so that at least a part of the dead volume (20) is occupied and a construction volume which is not occupied by filling elements (11) remains,
wherein the lifting area (7) has an outer shape which allows lowering of the lifting area (7) relative to the filling elements (11) through the construction volume from the starting position into the end position.

2. The method according to claim 1, wherein at least one of the filling elements (11) consists of a material having a high thermal conductivity and/or is tempered with a fluid.

3. The method according to claim 1 or 2, wherein the lifting area (11) consists of a material having a high thermal conductivity and/or is tempered with a fluid.

4. The method according to claim 2 or 3, wherein the tempering is a heating or cooling.

5. The method according to one of claims 2 to 4, wherein the fluid is liquid or gaseous.

6. The method according to at least one of claims 2 to 5, wherein the fluid is selected from water, thermal oil, inert gas, air and liquid metal.

7. The method according to at least one of the preceding claims, wherein at least one filling element (11) is lowered together with or independently of the lifting area (7).

8. The method according to at least one of the preceding claims, wherein the set of radiation sources comprises at least two, at least three or at least four radiation sources.

9. The method according to at least one of the preceding claims, wherein at least the steps c. to g. are conducted at a pressure of at most 10⁻³ mbar.

10. The method according to at least one of the preceding claims, wherein the radiation source is an electron beam gun.

11. The method according to at least one of the preceding claims, wherein the workpiece is cooled in a chamber which is different from the process chamber.

12. A device for the additive manufacture of workpieces (10) with
- a set of radiation sources which comprises at least one radiation source,
- at least one lowerable lifting area (7),
- at least one material reservoir for a raw material in powder form (21),
- at least one process chamber,
wherein the lifting area (7) can be moved between a starting position within the zone of influence of the radiation source and an end position being below the starting position, between the starting position and the end position a construction volume for the additive manufacture of workpieces (10) extends and at least one filling element (11) occupying a partial volume of the construction volume is arranged in it,
**characterized in that** the lifting area (7) has an outer shape which allows lowering of the lifting area (7) relative to the filling elements (11) through the construction volume from the starting position into the end position.

13. The device according to claim 12, wherein at least one of the filling elements (11) consists of a material having a high thermal conductivity and/or can be tempered with a fluid.

14. The device according to claim 12 or 13, wherein the lifting area (7) consists of a material having a high thermal conductivity and/or can be tempered with a fluid.

15. The device according to at least one of claims 12 to 14, wherein at least one filling element (11) can be lowered together with or independently of the lifting area (7).

16. The device according to at least one of claims 12 to 15, wherein the set of radiation sources comprises at least two, at least three or at least four radiation sources.

17. The device according to at least one of claims 12 to 16, comprising at least one vacuum pump.

18. The device according to at least one of claims 12 to 17, wherein the radiation source is an electron beam gun.

## Revendications

1. Procédé de fabrication additive d'une pièce (10), avec les étapes de
a. mise à disposition d'une table de travail (5) dans le champ d'action d'un jeu de sources de rayonnement, dans lequel le jeu de sources de rayonnement comprend au moins une source de rayonnement et dans lequel la table de travail (5) présente au moins une surface de levage abaissable (7) dans une position de départ,
b. présentation d'une couche de matériau brut pulvérulent (21) sur la surface de levage (7),
c. sollicitation de zones de la première couche de matériau, qui correspondent à la forme souhaitée de la pièce (10), avec un rayonnement de la source de rayonnement de sorte que le matériau brut (21) est chauffé dans les zones au moins en partie au moins à sa température de fusion,
d. abaissement de la surface de levage (7) à partir de la position de départ,
e. présentation d'une autre couche de matériau brut (21) sur la couche sollicitée précédemment,
f. sollicitation de zones de l'autre couche de matériau, qui correspondent à la forme souhaitée de la pièce (10), avec un rayonnement de la source de rayonnement de sorte que la poudre (21) est chauffée dans les zones au moins en partie au moins à sa température de fusion,
g. répétition des étapes d. à f. jusqu'à l'achèvement de la pièce (10), dans lequel la surface de levage (7) se trouve lors de l'achèvement de la pièce (10) dans une position finale,
h. refroidissement de la pièce achevée sur la surface de levage (7),
i. enlèvement de la pièce (10) de la surface de levage (7),
**caractérisé par** les autres étapes de
- détermination du volume mort (20) non nécessaire à la fabrication de la pièce (10) à l'intérieur du volume de construction, qui correspond à l'espace entre la position de départ et la position finale de la surface de levage (7),
- occupation du volume de construction avec un ou plusieurs corps de remplissage (11) de sorte qu'au moins une partie du volume mort (20) est occupée et qu'il reste un volume de construction non occupé par des corps de remplissage (11),
dans lequel la surface de levage (7) présente une forme extérieure, qui permet d'abaisser la surface de levage (7) par rapport aux corps de remplissage (11) par le volume de construction de la position de départ à la position finale.

2. Procédé selon la revendication 1, dans lequel au moins un des corps de remplissage (11) est en un matériau à conductibilité thermique élevée et/ou est mis à température avec un fluide.

3. Procédé selon la revendication 1 ou 2, dans lequel la surface de levage (11) est en un matériau à conductibilité thermique élevée et/ou est mise à température avec un fluide.

4. Procédé selon la revendication 2 ou 3, dans lequel la mise à température est un chauffage ou un refroidissement.

5. Procédé selon l'une quelconque des revendications 2 à 4, dans lequel le fluide est liquide ou gazeux.

6. Procédé selon au moins l'une quelconque des revendications 2 à 5, dans lequel le fluide est choisi parmi l'eau, l'huile thermique, le gaz inerte, l'air et le métal liquide.

7. Procédé selon au moins l'une quelconque des revendications précédentes, dans lequel au moins un corps de remplissage (11) est abaissé conjointement avec ou indépendamment de la surface de levage (7).

8. Procédé selon au moins l'une quelconque des revendications précédentes, dans lequel le jeu de sources de rayonnement présente au moins deux, au moins trois ou au moins quatre sources de rayonnement.

9. Procédé selon au moins l'une quelconque des revendications précédentes, dans lequel au moins les étapes c. à g. sont réalisées sous une pression de 10⁻³ mbar maximum.

10. Procédé selon au moins l'une quelconque des revendications précédentes, dans lequel la source de rayonnement est un canon à électrons.

11. Procédé selon au moins l'une quelconque des revendications précédentes, dans lequel la pièce refroidit dans une chambre séparée de la chambre de procédé.

12. Dispositif de fabrication additive de pièces (10) avec
- un jeu de sources de rayonnement, qui comprend au moins une source de rayonnement,
- au moins une surface de levage abaissable (7),
- au moins un réservoir de matériau pour un matériau brut sous forme de poudre (21),
- au moins une chambre de procédé,
dans lequel la surface de levage (7) est déplaçable entre une position de départ dans le champ d'action de la source de rayonnement et une position finale en dessous de la position de départ, un volume de construction pour la fabrication additive de pièces (10) s'étend entre la position de départ et la position finale et au moins un corps de remplissage (11) est agencé par occupation d'un volume partiel du volume de construction dans celui-ci,
**caractérisé en ce que** la surface de levage (7) présente une forme extérieure, qui permet d'abaisser la surface de levage (7) par rapport aux corps de remplissage (11) par le volume de construction de la position de départ à la position finale.

13. Dispositif selon la revendication 12, dans lequel au moins un des corps de remplissage (11) se compose d'un matériau à conductibilité thermique élevée et/ou peut être mis à température avec un fluide.

14. Dispositif selon la revendication 12 ou 13, dans lequel la surface de levage (7) se compose d'un matériau à conductibilité thermique élevée et/ou peut être mise à température avec un fluide.

15. Dispositif selon au moins l'une quelconque des revendications 12 à 14, dans lequel au moins un corps de remplissage (11) peut être abaissé conjointement avec ou indépendamment de la surface de levage (7).

16. Dispositif selon au moins l'une quelconque des revendications 12 à 15, dans lequel le jeu de sources de rayonnement présente au moins deux, au moins trois ou au moins quatre sources de rayonnement.

17. Dispositif selon au moins l'une quelconque des revendications 12 à 16, comprenant au moins une pompe à vide.

18. Dispositif selon au moins l'une quelconque des revendications 12 à 17, dans lequel la source de rayonnement est un canon à électrons.
